Europäisches Patentamt

European Patent Office

Office européen des brevets

(19)

(11) **EP 0 876 742 B1**

(12) **EUROPÄISCHE PATENTSCHRIFT**

(45) Veröffentlichungstag und Bekanntmachung des Hinweises auf die Patenterteilung:
**24.04.2002   Patentblatt 2002/17**

(21) Anmeldenummer: **97901047.7**

(22) Anmeldetag: **16.01.1997**

(51) Int Cl.⁷: $H05B\ 41/392$, $G01R\ 19/06$

(86) Internationale Anmeldenummer:
**PCT/EP97/00184**

(87) Internationale Veröffentlichungsnummer:
**WO 97/27726 (31.07.1997 Gazette 1997/33)**

(54) **VERFAHREN UND ELEKTRONISCHE STEUERSCHALTUNG ZUM REGELN DES BETRIEBSVERHALTENS VON GASENTLADUNGSLAMPEN**

METHOD AND CONTROL CIRCUIT FOR REGULATION OF THE OPERATIONAL CHARACTERISTICS OF GAS DISCHARGE LAMPS

PROCEDE ET CIRCUIT DE COMMANDE ELECTRONIQUE POUR LA REGULATION DES CARACTERISTIQUES DE FONCTIONNEMENT DE LAMPES A DECHARGE

(84) Benannte Vertragsstaaten:
**AT BE CH DE DK ES FI FR GB IE IT LI NL PT SE**

(30) Priorität: **26.01.1996   DE 19602765**
**02.04.1996   DE 19613257**

(43) Veröffentlichungstag der Anmeldung:
**11.11.1998   Patentblatt 1998/46**

(73) Patentinhaber: **Tridonic Bauelemente GmbH**
**6850 Dornbirn (AT)**

(72) Erfinder:
- **PRIMISSER, Norbert**
  **A-6833 Fraxern (AT)**
- **Luger, Siegfried**
  **A-6850 Dornbirn (AT)**

(74) Vertreter: **Schmidt-Evers, Jürgen, Dipl.-Ing. et al**
**Patentanwälte Mitscherlich & Partner,**
**Sonnenstrasse 33**
**80331 München (DE)**

(56) Entgegenhaltungen:
**EP-A- 0 461 441        DE-A- 3 826 551**

**Beschreibung**

Die vorliegende Erfindung betrifft ein Verfahren und eine elektronische Steuerschaltung, wie z.B. ein elektronisches Vorschaltgerät, zum Regeln des Betriebsverhaltens insbesondere der Helligkeit von Gasentladungslampen.

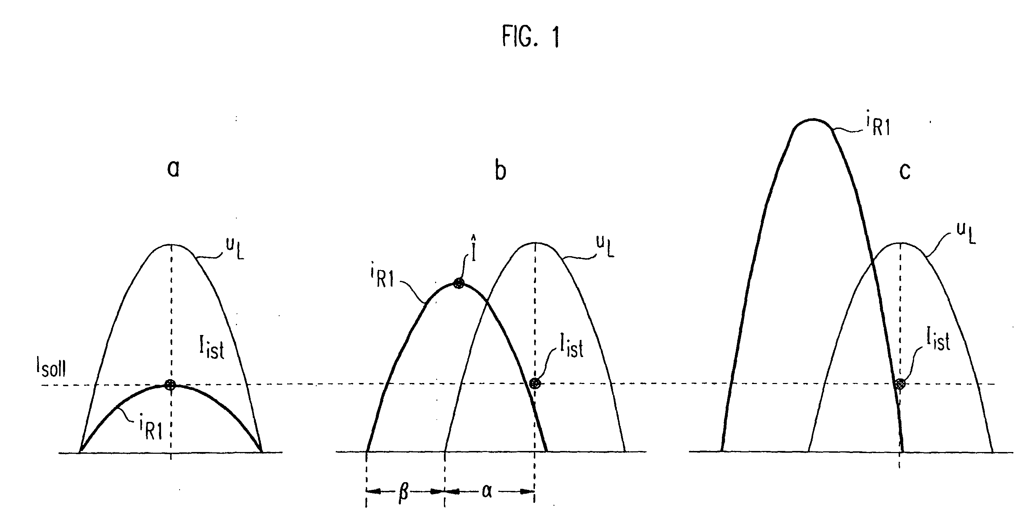

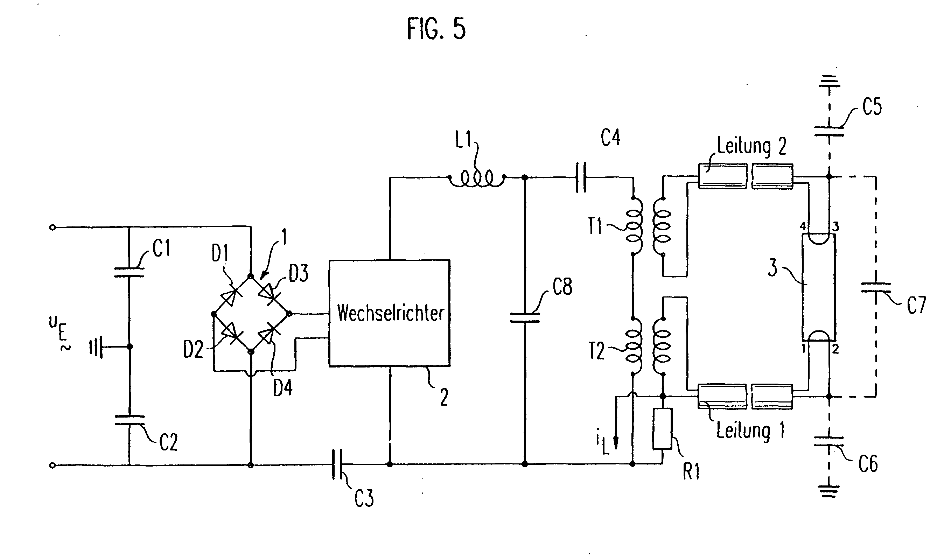

Fig. 5 zeigt beispielhaft den Aufbau eines bekannten elektronischen Vorschaltgerätes zur Ansteuerung einer Gasentladungslampe 3, wie es aus der EP-A1-0 490 329 bekannt ist. Aus der EP-A1-0 338 109 ist ein zu der in Fig. 1 gezeigten Schaltungsanordnung ähnliches elektronisches Vorschaltgerät bekannt, wobei jedoch anstelle von in Fig. 1 dargestellten Heiztransformatoren T1 und T2 ein parallel zu den Lampenwendeln geschalteter Zündoder Heizkondensator verwendet wird.

Gemäß Fig. 1 ist ein Gleichrichter 1 mit zu einer Brückenschaltung verschalteten Dioden D1-D4 über Kondensatoren C1 und C2 an eine Wechselspannungsquelle $u_E$ angeschlossen. Die Kondensatoren C1 und C2 sind Teil einer Funkentstöranordnung. Die von dem Gleichrichter 1 gleichgerichtete Eingangs-Wechelspannung $u_E$ wird einem Wechselrichter 2 zugeführt, der in der Regel zwei abwechselnd schaltende Halbleiterschalter aufweist. Der Wechselrichter 2 wandelt die von dem Gleichrichter 1 gleichgerichtete Zwischenkreisspannung in eine Ausgangs-Wechselspannung um. Dabei ist die Ausgangsfrequenz und/oder das Tastverhältnis zwischen den Einschaltzeiten der Halbleiterschalter des Wechselrichters 2 veränderbar. Die Ausgangsspannung des Wechselrichters wird einem Lastkreis zugeführt, der einen aus einer Spule L1 und einem Kondensator C8 bestehenden Serien-Resonanzkreis, einem Koppelkondensator C4, Heiztransformatoren T1 und T2 für die Lampenwendeln und die Gasentladungslampe 3 umfaßt. Die Gasentladungslampe 3 ist über Drahtleitungen mit den Heiztransformatoren T1 und T2 verbunden. An einem Shunt-Widerstand R1 wird der über die Gasentladungsstrecke der Gasentladungslampe 3 fließende Lampenstrom $i_L$ abgegriffen, der gewöhnlich als Regelgröße für die Helligkeit der Gasentladungslampe 3 verwendet wird, d.h. die Frequenz und/oder das Tastverhältnis des Wechselrichters 2 wird abhängig von dem Istwert des Lampenstromes $i_L$ geregelt, um die Helligkeit der Gasentladungslampe 3 zu dimmen. Die Gasentladungslampe 3 wird gedimmt, indem die Ausgangsfrequenz f des Wechselrichters 2 erhöht wird. Das anfängliche Zünden der Gasentladungslampe 3 erfolgt dadurch, daß die Ausgangsfrequenz des Wechselrichters 2 auf die Resonanzfrequenz des Serien-Resonanzkreises mit der Spule L1 und dem Kondensator C8 abgestimmt wird.

Wird jedoch der Lampenstrom $i_L$ als Regelgröße verwendet, können Betriebsstörungen die Folge von zu langen Anschlußleitungen zwischen den Anschlüssen des elektronischen Vorschaltgerätes und der Gasentladungslampe sein. Dies macht sich insbesondere bei starker Dimmung, d.h. bei geringer Helligkeit der Gasentladungslampe bemerkbar. Diese Betriebsstörungen werden durch kapazitive Einflüsse der Verdrahtung verursacht, da zwischen den Leitungen und Erde parasitäre Kapazitäten C5 und C6 und zwischen den Leitungen eine parasitäre Kapazität C7 auftritt. Aus Fig. 5 ist ersichtlich, daß die Kapazitäten C5 und C6 zwischen den Leitungen und Erde den über den Widerstand R1 erfaßten Lampenstrom $i_L$ wenig beeinflussen, da die über diese Kapazitäten C5 und C6 fließenden kapazitiven Ströme an dem Widerstand R1 vorbeigeleitet werden bzw. die Kapazität C6 der Leitung 2 gegen Erde durch den Dimmkondensator C3 bezüglich R1 ausgeglichen wird.

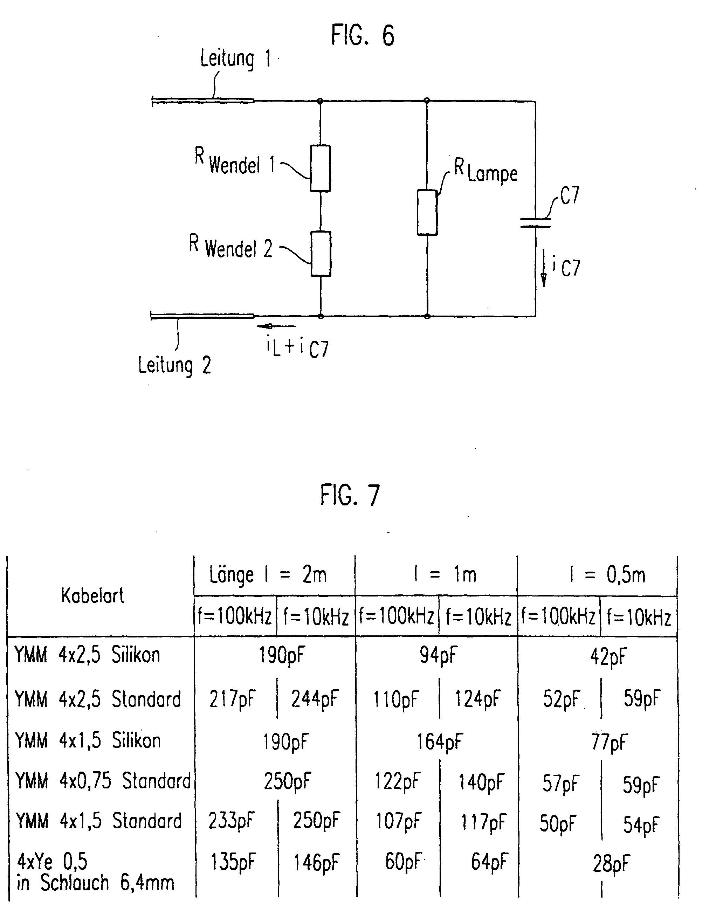

Dagegen überlagert der durch die parasitäre Kapazität C7 zwischen den Leitungen hervorgerufene kapazitive Strom den über den Shunt-Widerstand R1 erfaßte Lampenstrom $i_L$. Das in Fig. 6 dargestellte vereinfachte Widerstand-Ersatzschaltbild der Leitungen mit der Gasentladungslampe 3 und der parasitären Kapazität C7 zeigt, daß dem Meßwiderstand R1 über die Leitung 2 der über den Lampenwiderstand $R_{Lampe}$ fließenden Lampenstrom $i_L$ und dem über die parasitäre Kapazität C7 fließenden kapazitiven Strom $i_{C7}$ zugeführt wird. Über den Shunt-Widerstand R1 fließt somit kein rein ohmscher Strom, sondern ein in Abhängigkeit von der parasitären Kapazität C7 gegenüber der Lampenspannung phasenverschobener Strom $i_L + i_{C7}$.

Wie bereits erwähnt, wird der über den Widerstand R1 fließende Strom zur Regelung der Helligkeit der Gasentladungslampe 3 eingesetzt. Insbesondere wird dabei der Spitzenwert dieses Stromes erfaßt, wobei dieser Spitzenwert mit einem vorgegebenen Sollwert, der durch die Dimmeinstellung veränderbar ist, verglichen wird und anschließend wird ggf. die Ausgangsfrequenz f oder das Tastverhältnis d der Schalter des Wechselrichters des elektronischen Vorschaltgerätes verändert. Wird ein zu hoher Lampenstrom über den Widerstand R1 erfaßt, wird die Wechselrichterfrequenz f erhöht, so daß die Spannung an dem Heizkondensator C8 des Serienschwingkreises sinkt. Die zu dem Kondensator C8 parallel geschaltete Gasentladungslampe 3 liegt in diesem Fall an einer geringeren Spannung und gibt somit weniger Licht ab.

Bei der in Fig. 5 gezeigten bekannten Schaltungsanordnung ist jedoch eine genaue Regelung des Betriebsverhaltens der Gasentladungslampe abhängig von dem über den Widerstand R1 erfaßten Lampenstrom nicht möglich, da tatsächlich über den Widerstand R1 der Spitzenwert des Summenstromes $i_L(t) + i_{c.7}(t)$ (vergl. Fig. 6) erfaßt wird, d.h. die Summe aus dem über die Wendelwiderstände $R_{Wendel\ 1}$ und $R_{Wendel\ 2}$ und den Lampenwiderstand $R_{Lampe}$ der Gasentladungslampe 3 fließenden Lampenstrom $i_L$ und dem über die parasitäre Kapazität C7 fließenden kapazitiven Strom $i_{C7}$. Da mit zunehmender Frequenz, d.h. stärkerer Dimmung, der kapazitive Widerstand der parasitären Kapazität C7 sinkt und der Lampenwiderstand $R_{Lampe}$ konstant bleibt, erhöht sich innerhalb des an dem Widerstand R1 erfaßten Stromes der Anteil des kapazitiven Stromes $i_{C7}$ gegenüber dem Anteil des rein ohmschen Lampenstromes $i_L$. Dies bedeutet, daß bei starker Dimmung das elektronische Vorschaltgerät über den Widerstand R1 einen zu hohen Strom erfaßt und fälschlicherweise diesen überhöhten Strom als Istwert des Lampenstroms $i_L$ interpretiert.

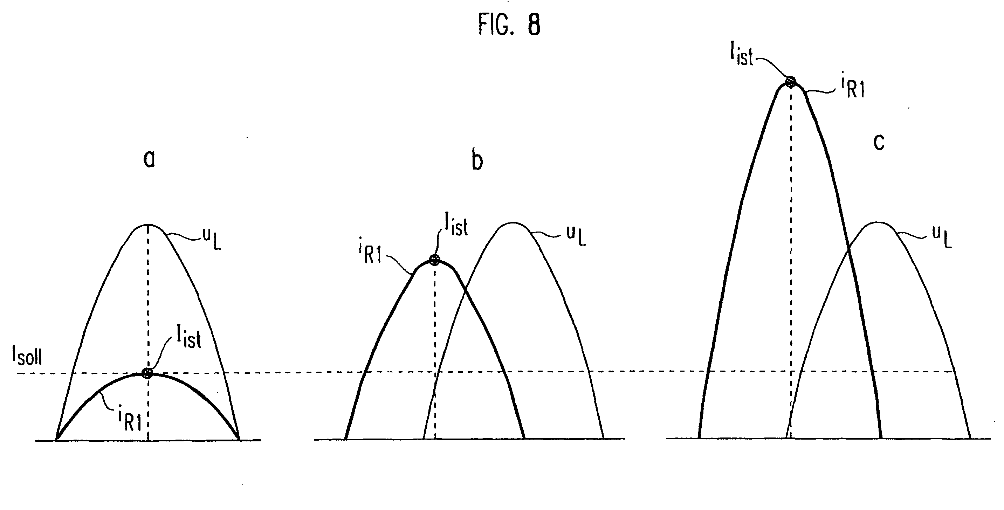

Fig. 8 zeigt diesen Vorgang, wobei die Figuren 8a bis 8c unterschiedliche Verläufe der Lampenspannung $u_L$ und des an dem Widerstand R1 erfaßten Stromes $i_{R1}$ für unterschiedliche Werte der Leitungskapazität C7 darstellen. Fig. 8a zeigt den Idealfall, wenn die parasitäre Leitungskapaziät C7 sehr klein ist, so daß der Anteil des kapazitiven Stromes $i_{C7}$ an dem über den Widerstand R1 erfaßten Strom vernachläßigbar gering ist und dieser über den Widerstand R1 erfaßte Strom im wesentlichen dem Lampenstrom $i_L$ entspricht. Da es sich in diesem Fall um einen im wesentlichen rein ohmschen Strom handelt, ist der Strom gegenüber der Lampenspannung $u_L$ nicht phasenverschoben. Wie bereits beschrieben, wird gewöhnlich der Spitzenwert des an dem Widerstand R1 erfaßten Stromes gemessen. Dieser Spitzenwert wird als Istwert $I_{ist}$ mit einem vorgegebenen Sollwert $I_{soll}$ verglichen. Bei dem in Fig. 8a dargestellten Fall entspricht der erfaßte Spitzenweit $I_{ist}$ dem Sollwert $I_{soll}$, so daß eine Regelung der Helligkeit der Gasentladungslampe 3 nicht erforderlich ist. Fig.8b zeigt diesen Vorgang, wenn zwischen den Leitungen eine mittlere Leitungskapazität C7 auftritt. Aus Fig. 8b ist ersichtlich, daß aufgrund des über die Leitungskapaziät C7 fließenden kapazitiven Stromes $i_{C7}$ nicht nur der Strom $i_{R1}$ auch gegenüber der Lampenspannung $u_L$ phasenverschoben ist, sondern der erfaßte Spitzenwert $I_{ist}$ gegenüber dem in Fig. 8a dargestellten Fall deutlich erhöht ist. Das elektronische Vorschaltgerät würde daher bei dem in Fig. 8b gezeigten Signalverlauf erkennen, daß der erfaßte Spitzenwert $I_{ist}$ größer als der erfaßte Sollwert $I_{soll}$ ist. Das elektronische Vorschaltgerät würde daher versuchen, diesen erhöhten Strom durch Frequenzerhöhung am Wechselrichter 2 wieder zu verringern, wobei jedoch dieser Absicht der durch die steigende Frequenz sinkende kapazitive Widerstand der parasitären Kapazität C7 entgegenwirkt, wodurch der kapazitive Anteil $i_{C7}$ an dem über den Meßwiderstand R1 erfaßten Strom $i_{R1}$ erhöht wird. Dieser Kreislauf führt schließlich zum Erlöschen der Lampe, wobei jedoch das Erlöschen der Gasentladungslampe 3 durch das elektronische Vorschaltgerät durch Erfassen des über den Widerstand R1 fließenden Stroms $i_{R1}$ nicht festgestellt werden kann, da auch bei Erlöschen der Lampe über die parasitäre Kapazität C7 ein kapazitiver Strom $i_{C7}$ fließt. Fig. 8c zeigt entsprechende Signalverläufe für das Auftreten eines hohen Leitungskapazitätswerts zwischen den Leitungen, die die Gasentladungslampe 3 mit dem elektronischen Vorschaltgerät verbinden. Bei den in Fig. 8c dargestellten Signalverläufen ist aufgrund des deutlich erhöhten Anteiles des kapazitiven Stromes $i_{C7}$ gegenüber dem Lampenstrom $i_L$ der daraus resultierende Summenstrom $i_{R1}$ nochmals deutlich erhöht. Der durch die Überlagerung mit dem kapazitiven Strom $i_{C7}$ auftretende Meßfehler ist bei dem in Fig. 8c dargestellten Fall am größten.

Aufgrund der vorhergehenden Beschreibung wird deutlich, daß durch die kapazitiven Einflüsse der Verdrahtung ein korrekter Dimmbetrieb der Gasentladungslampe nicht möglich ist, da insbesondere bei starker Dimmung der Gasentladungslampe der über die Leitungskapazität C7 fließende kapazitive Strom $i_{C7}$ deutlich den eigentlich zu erfassenden Lampenstrom $i_L$ überlagert. Die bisher verwendete Meßmethode, bei der der Scheitelwert des über den Widerstand R1 fließenden Stromes $i_{R1}$ erfaßt wird, ist daher bei elektronischen Vorschaltgeräten. die große Dimmbereiche (zwischen 100% und 1% Helligkeit) abdecken, zu ungenau. Fig. 7 zeigt für verschiedene Kabelarren sowie für verschiedene Kabellängen 1 und für verschiedene Betriebsfrequenzen f den zwischen den Leitungen auftretenden Wert der parasitären Leirungskapazität C7. Aus Fig. 7 ist ersichtlich, daß einerseits die parasitäre Kapazität C7 mit größer werdender Kabellänge 1 ansteigt und andererseits eine größere Leitungskapazität bei geringerer Betriebsfrequenz f auftritt. Die in Fig. 7 gezeigten Meßergebnisse zeigen, daß Leuchtenhersteller für einen geringen Einfluß der Leitungskapazität Rücksicht auf eine bestimmte maximal zulässige Länge der Verdrahtung nehmen müßten. Das Vorgeben einer maximal zulässigen Verdrahrungslänge ist jedoch unerwünscht.

Der Erfindung liegt daher die Aufgabe zugrunde, ein Verfahren und eine Steuerschaltung, insbesondere zur Durchführung des Verfahrens, zum Regeln und/oder Erfassen des Betriebszustandes von Gasentladungslampen anzugeben, wobei ein genaues Regeln und/oder Erfassen des Betriebszustandes möglich ist und keine Rücksicht auf die Verdrahtungslänge zwischen der Gasentladungslampe und einem vorgeschalteten elektronischen Vorschaltgerät genommen werden muß.

Diese Aufgabe wird bezüglich des Verfahrens durch die Merkmale der Patentansprüche 1 und 2 und bezüglich der elektronischen Steuerschaltung durch die Merkmale des Patentanspruches 12 gelöst,

Erfindungsgemäß wird vorgeschlagen, nur den Wirkanteil des Lampenstroms, d.h. seinen Realteil, auszuwerten. Auf diese Weise wird der Einfluß des über die parasitäre Leitungskapazität fließenden kapazitiven Stromes eliminiert und es ist eine genaue Regelung bzw. Erfassung des Betriebszustandes möglich, ohne daß Rücksicht auf die Leitungslänge genommen werden muß. Insbesondere kann die angeschlossene Lampe genau über große Dimmbereiche gedimmt werden.

Weitere vorteilhafte Ausgestaltungen der Erfindung sind in den Unteransprüchen angegeben.

Die Erfindung wird nachfolgend anhand bevorzugter Ausführungsbeispiele näher erläutert.

Es zeigen:

- Fig. 1 Strom- und Spannungsverläufe eines ersten erfindungsgemäßen Ausführungsbeispiels,

- Fig. 2 Strom- und Spannungsverläufe zur Erläuterung eines zweiten erfindungsgemäßen Ausführungsbeispiels,

- Fig. 3 eine schematische Darstellung eines erfindungsgemäßen elektronischen Vorschaltgerätes,

- Fig. 4a und 4b Diagramme zum Vergleich der erfindungsgemäßen Verfahren mit dem bekannten Regelungsverfahren,

- Fig. 5 die Darstellung eines bekannten elektronischen Vorschaltgerätes,

- Fig. 6 ein vereinfachtes Widerstand-Ersatzschaltbild der in Fig. 5 gezeigten Leitungen, der Lampe und der parasitären Leitungskapazität,

- Fig. 7 beispielshafte Werte der Leitungskapazität für unterschiedliche Kabelarten, Kabellängen und Betriebsfrequenzen, und

- Fig. 8 Strom- und Signalverläufe zur Erläuterung des bekannten Regelungsverfahren.

Fig. 1 zeigt für verschieden große Werte der in Fig. 5 gezeigten Leitungskapazität C7 Verläufe des über den Widerstand R1 erfaßten Stromes $i_{R1}$ und der Lampenspannung $u_L$. Fig. 1a zeigt die Signalverläufe für einen sehr geringen Leitungskapazitätswert C7, so daß der den eigentlichen Lampenstrom $i_L$ überlagernde und über die Leitungskapazität C7 fließende kapazitive Strom $i_{C7}$ vernachlässigbar gering ist. In diesem Fall tritt zwischen dem über den Widerstand R1 erfaßten Strom $i_{R1}$ und der Lampenspannung $u_L$ keine Phasenverschiebung auf und der über den Widerstand R1 erfaßte Strom entspricht idealerweise dem eigentlich zu messenden Lampenstrom $i_L$. Insoweit unterscheiden sich die in Fig. 1a dargestellten Signalverläufe nicht von den in Fig. 8a dargestellten Signalverläufen. Fig. 1b zeigt Signalverläufe für den Fall, daß sich zwischen den in Fig. 5 gezeigten Leitungen eine mittlere Leitungskapazität C7 ausbildet, so daß der über den Widerstand R1 erfaßte Strom gegenüber der Lampenspannung $u_L$ phasenverschoben ist und der Lampenspannung $u_L$ voraus eilt. Erfindungsgemäß wird vorgeschlagen, den über den Widerstand R1 fließenden Strom nur dann zu messen, wenn die Lampenspannung $U_L$ ihren Scheitelwert erreicht hat. Für einen rein sinusförmigen verlaufenden Strom $i_{R1}$ gilt somit folgende Formel:

$$I_{ist} = \hat{I} \cdot \sin(\alpha + \beta) \qquad (1).$$

Dabei entspricht Î dem Scheitelwert des über dem Widerstand R1 erfaßten Stromes. Für rein sinusförmige Größen gilt jedoch auch:

$$\alpha = \pi/2 \qquad (2).$$

Da gilt:

$$\sin(\alpha + \pi/2) = \cos(\alpha) \qquad (3).$$

Vereinfacht sich Formel (1) zu:

$$I_{ist} = \hat{I} \cdot \cos\beta \qquad (4).$$

Für die Extremwerte $\beta = 0°$ und $\beta = 90°$ $(\pi/2)$ nimmt somit $i_{R1}$ die Werte Î und Null an.

Bei Kenntnis des Scheitelwertes Î des über den Widerstand R1 erfaßten Stromes $i_{R1}$ kann somit durch Erfassen der Phasendifferenz zwischen dem Strom $i_{R1}$ und der Lampenspannung $u_L$ der unverfälschte Istwert $I_{ist}$ zu dem Zeitpunkt berechnet werden, wenn die Lampenspannung $u_L$ ihren positiven Scheitelwert erreicht hat. Fig. 1c zeigt entsprechende Verläufe für einen sehr großen Wert der Leitungskapazität C7, so daß der über den Widerstand R1 gemessene Strom $i_{R1}$ deutlich erhöht und gegenüber der Lampenspannung $u_L$ deutlich phasenverschoben ist. Selbst bei einem derartigen starken Einfluß des über die parasitäre Kapazität C7 fließenden kapazitiven Stromes $i_{C7}$ wird durch das erfindungsgemäße Verfahren stets der dem eigentlichen Lampenstrom $i_L$ entsprechende Istwert $I_{ist}$ gemessen, so daß auch bei starker Dimmung eine genaue Regelung der Lampenhelligkeit möglich ist.

Das in Figur 1 dargestellte Verfahren ermittelt den Istwert $I_{ist}$ nur für rein sinusförmige Stromverläufe fehlerfrei. Dieses Verfahren ist jedoch auch für andere periodische Kurvenverläufe anwendbar, wobei jedoch stets ein gleichbleibender Fehler auftritt.

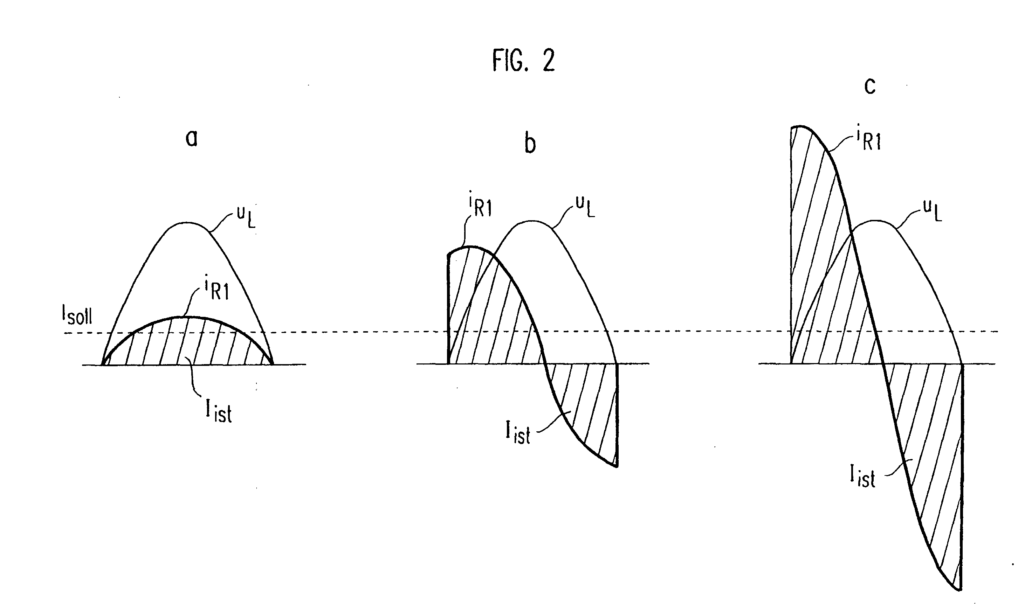

Fig. 2 zeigt die entsprechenden Strom- und Spannungsverläufe zur Erläuterung des zweiten erfindungsgemäßen Ausführungsbeispiels. Fig. 2a zeigt wiederum die Verläufe für einen vernachläßigbaren kapazitiven Strom über die Leitungskapazität C7, während Fig. 2b und 2c die Signalverläufe für eine mittlere Leitungskapazität sowie eine sehr hohe Leitungskapazität darstellen.

Nach dem zweiten Ausführungsbeispiel des erfindungsgemäßen Verfahrens wird vorgeschlagen, den über den Widerstand R1 erfaßten Strom $i_{R1}$ während einer Halbwelle der Lampenspannung $u_L$ zu mitteln. Es wird somit als Istwert $I_{ist}$ des Lampenstromes

$i_L$, welcher als Regelgröße für die Frequenz bzw. das Tastverhältnis des Wechselrichters dient, der arithmetische Mittelwert des Stromes $i_{R1}$ während einer Halbwelle der Lampenspannung $u_L$ ermittelt. Aus Fig. 2 ist ersichtlich, daß aufgrund der durch die Leitungskapazität C7 hervorgerufenen Strom-Spannungsverschiebung der dadurch erfaßten Mittelwert, d.h. $I_{ist}$, während der positiven Halbwelle der Lampenspannung $u_L$ dem Kosinus des in Fig. 1b gezeigten Verschiebungswinkels β folgt. Es gilt somit:

$$I_{ist} \sim \cos \beta \qquad (5).$$

Für den Extremwert β = 0° gilt, daß die gesamte schraffierte Fläche über der Nullinie das Maß für den Istwert $I_{ist}$ des Lampenstroms $i_L$ ist, während für β=π/2 die Flächen oberhalb und unterhalb der Nullinie gleich groß sind und somit der arithmetische Mittelwert, d.h. $I_{ist}$, Null ist. Zwischen diesen beiden Extremwerten für $I_{ist}$ verbleibt immer ein positiver Flächenanteil und somit ein entsprechender Mittelwert, der als Istwert $I_{ist}$ des Lampenstroms $I_L$ ausgewertet und als Regelgröße für die Helligkeit der Gasentladungslampe verwendet wird.

Aus Fig. 2 ist ersichtlich, daß aufgrund der arithmetischen Mittelwertbildung der Anteil des durch die parasitäre Leitungskapazität C7 hervorgerufenen kapazitiven Stromes $i_{C7}$ eliminiert werden kann und somit eine genaue Dimmung der Gasentladungslampe über einen weiten Dimmbereich möglich ist. Insbesondere ist es auch bei dem in Fig. 2 dargestellten zweiten Ausführungsbeispiel des erfindungsgemäßen Verfahrens möglich, durch Erfassen der Phasenverschiebung zwischen dem Strom $i_{R1}$ und der Lampenspannung $u_L$ auf den korrekten Istwert $I_{ist}$ als Regelgröße für den Wechselrichter zu schließen.

Den in Fig. 1 und 2 dargestellten Verfahren ist gemeinsam, daß stets nur der tatsächliche Wirkanteil des Lampenstroms ausgewertet wird. Bei einem komplexen Lampenstrom bedeutet dies, daß nur der Realteil des Lampenstroms für die Regelung des Betriebszustandes verwendet wird.

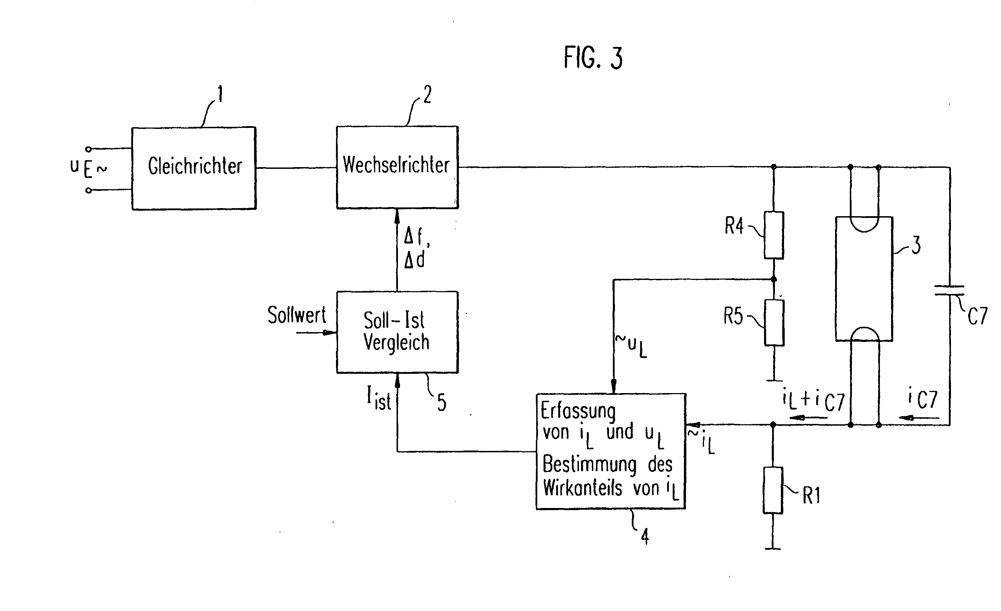

Fig. 3 zeigt ein vereinfachtes Blockschaltbild eines erfindungsgemäßen elektronischen Vorschaltgerätes, welches insbesondere zur Durchführung des erfindungsgemäßen Verfahrens eingesetzt wird. Neben den bereits in Fig. 5 gezeigten Schaltungselementen ist zudem eine Vorrichtung 4 zur Erfassung der Lampenspannung $u_L$ und des über den Widerstand R1 fließenden Stroms $i_{R1}$ vorgesehen. Eine der Lampenspannung $u_L$ proportionale Meßgröße wird zwischen den Widerständen R4 und R5 abgegriffen und der Vorrichtung 4 zugeführt. Wie bereits anhand Fig. 5 beschrieben, wird über den Shunt-Widerstand R1 eine dem Lampenstrom $i_L$ proportionale Meßgröße abgegriffen und der Vorrichtung 4 zugeführt. Die Vorrichtung 4 ermittelt aufgrund der zugeführten Signalverläufe den tatsächlichen Wirkanteil des Lampenstroms, d.h. die Vorrichtung 4 ermittelt nach den zuvor beschriebenen Ausführungsbeispielen des erfindungsgemäßen Verfahrens den bezüglich des kapazitiven Anteils $i_{C7}$ korrigierten Istwert $I_{ist}$ des Lampenstroms $I_L$. Dieser Istwert $I_{ist}$ wird einer Vorrichtung 5 zugeführt, die den ermittelten Istwert $I_{ist}$ einem Soll-Ist-Vergleich mit einem Sollwert, d.h. einem vorgegebenen Sollwert $I_{soll}$, unterzieht. Abhängig von diesem Soll-Ist-Vergleich wird die Frequenz f bzw. das Tastverhältnis d des Wechselrichters 2 verändert, um die Helligkeit der Gasentladungslampe 3 zu regeln. Alternativ kann jedoch auch vorgesehen sein, den von der Vorrichtung 4 ermittelten Istwert $I_{ist}$ direkt dem Wechselrichter 2 zuzuführen.

Es sei darauf hingewiesen, daß $u_L$ und $i_L$ auch durch eine von der Vorrichtung 4 getrennte Vorrichtung erfaßt werden können. Ebenso kann anstelle von $u_L$ eine oder mehrere andere Bezugsgrößen verwendet werden. Als Bezugsgröße könnte beispielsweise auch der bzw. die Ansteuerzeitpunkte der Schalter des Wechselrichters 2 herangezogen werden, da sich bei einer vorgegebenen Schaltungsanordnung der Strom- und Spannungsverlauf vorhersagen läßt. Somit kann beispielsweise festgelegt werden, daß nach einer bestimmten Zeitspanne nach Einschalten des einen Wechselrichterschalters der Strom gemessen wird. Wird die Zeitspanne so gewählt, daß die Strommessung zum Zeitpunkt des Spannungsmaximums erfolgt, entspricht der gemessene Strom dem tatsächlichen Wirkanteil des Lampenstromes. Ebenfalls ist möglich, zwischen dem Ein- und Ausschalten eines Schalters des Wechselrichters 2 den Mittelwert des gemessenen Stromes zu bilden.

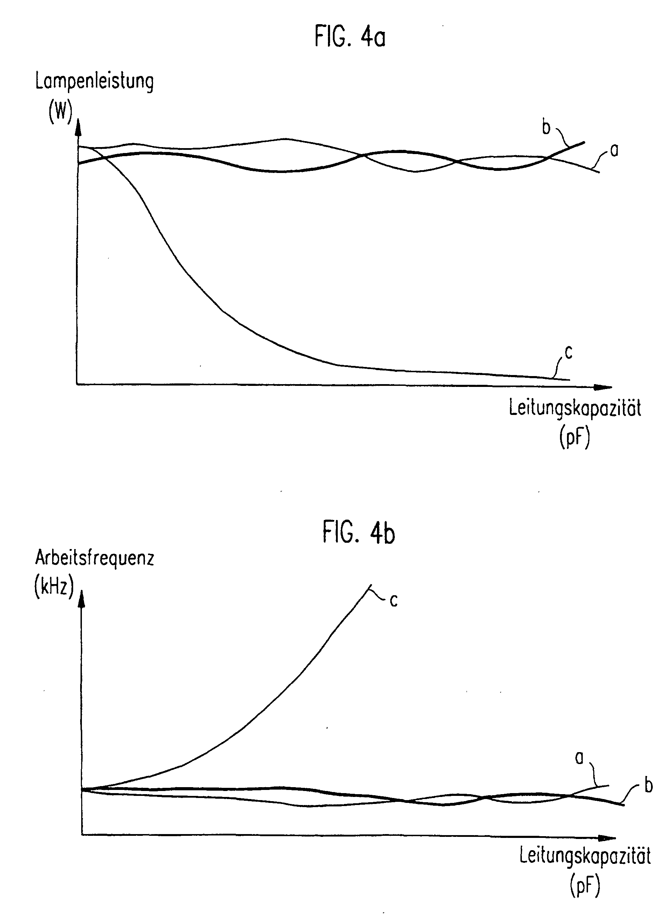

Fig. 4a und 4b zeigen Diagramme zum Vergleich des bekannten Regelungsverfahrens mit dem erfindungsgemäßen Regelungsverfahren. In Fig. 4a ist die Lampenleistung abhängig von dem Wert der parasitären Leitungskapazität dargestellt. Es ist ersichtlich, daß, wie bereits beschrieben, der mit c bezeichnete und dem bekannten Regelungsverfahren entsprechende Verlauf stark abhängig von der Leitungskapazität ist, während die mit a bzw. b bezeichneten Verläufe gemäß dem ersten bzw. zweiten Ausführungsbeispiel des erfindungsgemäßen Verfahrens nahezu unabhängig von der Leitungskapazität sind. Des weiteren ist aus Fig. 4b ersichtlich, daß die Arbeitsfrequenz bei dem bekannten Regelungsverfahren deutlich durch die Leitungskapazität beeinflußt wird (vgl. Verlauf c), während mit den erfindungsgemäßen Verfahren ein von der Leitungskapazität nahezu unabhängiger Betrieb möglich ist (vgl. Verläufe a und b). Es sei darauf hingewiesen, daß die in Fig. 4a und 4b dargestellten Verläufe für konstante Widerstandswerte der Lampe dargestellt sind. Für größere Lampenwiderstandswerte wurde festgestellt, daß sich die Verläufe a und b gemäß der Erfindung nach unten verschieben, während die Verläufe c für das bekannte Regelungsverfahren im wesentlichen unverändert bleiben.

Abschließend wird darauf hingewiesen, daß die erfindungsgemäßen Regelungsverfahren zudem vorteilhaft sind, wenn eine schnelle Zünderkennung realisiert werden soll. Eine derartige schnelle Zünderkennung ist insbesondere dann vorteilhaft, wenn die Gasentladungslampe nach ihrer Zündung möglichst rasch in ihrer Helligkeit gedimnt werden soll. Insbesondere, wenn eine Lampe mit geringer Helligkeit gestartet werden soll, ist der durch die parasitäre Leitungskapazität C7 verursachte kapazitive Stromanteil $i_{C7}$ problematisch, da, um unmittelbar nach Zünden der Gasentladungslampe die Ausgangsfrequenz des Wechselrichters zum Dimmen der Gasentladungslampe erhöhen zu können, nach Erfassen eines über den Meßwiderstand R1 fließenden Stroms auf die erfolgreiche Zündung der Gasentladungslampe rückgeschlossen wird. Bei dem bekannten Regelungsverfahren können dadurch Fehler auftreten, daß selbst bei nicht gezündeter Gasentladungslampe über die kapazitive Leitungskapazität C7 der kapazitive Stromanteil $i_{C7}$ fließt, der fälschlicherweise als der durch die Zündung der Gasentladungslampe hervorgerufene Lampenstrom interpretiert werden konnte. Da jedoch nunmehr durch Verwendung der erfindungsgemäßen Regelungsverfahren der erfaßte Istwert nahezu unabhängig von den Einflüssen der Leitungskapazität C7 ist, kann aufgrund des erfindungsgemäß ermittelten Istwerts des Stromes an dem Widerstand R1 zuverlässig bei Überschreiten einer exakt definierbaren Schwelle auf die erfolgreiche Zündung der Gasentladungslampe geschlossen werden.

Das erfindungsgemäße Verfahren und die erfindungsgemäße Steuerschaltung kann auch auf das in der eingangs erwähnten EP-A1-0 338 109 beschriebene elektronische Vorschaltgerät angewendet werden, welches einen parallel zu der Gasentladungsstrecke der Lampe angeordneten Zünd- bzw. Heizkondensator aufweist.Trotz des parallel geschalteten Heizkondensators kann erfindungsgemäß der tatsächliche Lampenstrom erfaßt werden. Dies hat zur Folge, daß bei der in der EP-A1-0 338 109 beschriebenen nicht dimmbaren Anordnung Bauteiltoleranzen und Umgebungseinflüsse (wie z.B. die Umgebungstemperatur) auf die Lampe, die an sich die Regelgenauigkeit beeinflussen würden, durch Anwendung der Erfindung eliminiert werden.

Allgemein kann die Erfindung mit ihren zuvor ausführlich erläuterten Vorteilen sowohl auf dimmbare als auch nicht dimmbare Geräte angewendet werden. Insbesondere ist die Erfindung auch auf elektronische Vorschaltgeräte anwendbar, die fremdgeführten Wechselrichtern aufweisen und somit geregelt werden müssen.

## Patentansprüche

1. Verfahren zum Regeln des Betriebsverhaltens mindestens einer Gasentladungslampe (3), welche insbesondere über ein elektronisches Vorschaltgerät betrieben wird, abhängig von einer Regelgröße ($I_{ist}$),
   **dadurch gekennzeichnet,**
   **daß** die Regelgröße ($I_{ist}$) auf dem Wirkanteil des Lampenstroms ($i_L$) ,d.h. seinem Realteil, bzw. einer dem Wirkanteil entsprechenden Größe beruht.

2. Verfahren zum Erfassen und/oder Bewerten des Betriebszustandes mindestens einer Gasentladungslampe (3), welche insbesondere über ein elektronisches Vorschaltgerät betrieben wird, durch Messung von mindestens einer dem Lampenstrom ($i_L$) entsprechenden Größe,
   **dadurch gekennzeichnet,**
   **daß** zum Erfassen und/oder Bewerten des Betriebszustandes der Wirkanteil des Lampenstroms ($i_L$), d.h. sein Realteil, bzw. eine dem Wirkanteil entsprechende Größe bestimmt wird.

3. Verfahren nach einem der Ansprüche 1 oder 2,
   **dadurch gekennzeichnet,**
   **daß** abhängig von dem Wirkanreil die Frequenz (f) und/oder das Tastverhältnis (d) einer mit der Gasentladungslampe (3) verbundenen Wechselspannungsquelle (2) verändert wird.

4. Verfahren nach einem der Ansprüche 1 bis 3,
   **dadurch gekennzeichnet,**
   **daß** der Lampenstrom ($i_L$) zu dem Zeitpunkt gemessen wird, wenn die Lampenspannung ($u_L$) ihren positiven Scheitelwert erreicht hat, und
   **daß** der daraus gewonnene Istwert des Lampenstroms ($I_{ist}$) als Regelgröße verwendet wird.

5. Verfahren nach einem der Ansprüche 1 bis 3,
   **dadurch gekennzeichnet,**
   **daß** während einer Halbwelle der Lampenspannung ($u_L$) der arithmetische Mittelwert des Lampenstroms ($i_L$) gebildet wird, und
   **daß** der Istwert des arithmetischen Mittelwerts des Lampenstroms ($i_L$) als Regelgröße verwendet wird.

6. Verfahren nach Anspruch 4 oder 5,
   **dadurch gekennzeichnet,**
   **daß** der Lampenstrom ($i_L$) über einen mit der Gasentladungslampe (3) in Serie geschalteten Shunt-Widerstand (R1) gemessen wird.

7. Verfahren nach einem der Ansprüche 4 bis 6,
   **dadurch gekennzeichnet,**
   **daß** die Helligkeit der Gasentladungslampe (3) geregelt wird.

8. Verfahren nach einem der vorhergehenden Ansprüche,
   **dadurch gekennzeichnet,**
   **daß** die dem Wirkanteil des Lampenstroms ($i_L$) entsprechende Größe aus der Ansteuerung mindestens eines steuerbaren Schalters eines zum Betreiben der mindestens einen Gasentladungslampe (3) dienenden elektronischen Vorschaltgeräts abgeleitet wird.

9.  Verfahren nach Anspruch 8,
    **dadurch gekennzeichnet,**
    **daß** nach Einschalten des mindestens einen steuerbaren Schalters des elektronischen Vorschaltgeräts der Strom zum Zeitpunkt des Spannungsmaximums gemessen und als die dem Wirkanteil des Lampenstroms ($i_L$) entsprechende Größe verwendet wird.

10. Verfahren nach Anspruch 8,
    **dadurch gekennzeichnet,**
    **daß** zwischen dem Ein- und Ausschalten des mindestens einen steuerbaren Schalters der Mittelwert des Stromes gebildet und als die dem Wirkanteil des Lampenstroms ($i_L$) entsprechende Größe verwendet wird.

11. Elektronische Steuerschaltung zum Ansteuern mindestens einer Gasentladungslampe (3), insbesondere zur Durchführung des Verfahrens nach einem der vorhergehenden Ansprüche, mit einer in ihrer Ausgangsfrequenz (f) und/oder ihrem Tasrverhältnis veränderbaren Spannungsquelle (2), und mit einer Vorrichtung zum Erfassen der Lampenspannung ($u_L$) und des Lampenstroms ($i_L$),
    **dadurch gekennzeichnet,**
    **daß** eine Vorrichtung (4) zum Bestimmen des Wirkanteils des Lampenstroms ($i_L$), d.h. seines Realteils, vorhanden ist.

12. Elektronische Steuerschaltung nach Anspruch 11,
    **dadurch gekennzeichnet,**
    **daß** die Vorrichtung (4) zum Bestimmen des Wirkanteils des Lampenstroms ($i_L$) eine von dem Wirkanteil abhängige Regelgröße für das Betriebsverhalten, insbesondere die Helligkeit, der Gasentladungslampe ermittelt.

13. Elektronische Steuerschaltung nach Anspruch 12,
    **dadurch gekennzeichnet,**
    **daß** die Regelgröße der Istwert ($I_{ist}$) des gemessenen Lampenstroms ($i_L$) zu dem Zeitpunkt ist, wenn die Lampenspannung ($u_L$) ihren positiven Scheitelwert erreicht hat.

14. Elektronische Steuerschaltung nach Anspruch 12,
    **dadurch gekennzeichnet,**
    **daß** die Regelgröße der Istwert des arithmetischen Mittelwertes des gemessenen Lampenstoms ($i_L$) während einer Halbwelle der Lampenspannung ($u_L$) ist.

15. Elektronische Steuerschaltung nach einem der Ansprüche 12 bis 14,
**dadurch gekennzeichnet,**
**daß** die veränderbare Spannungsquelle ein Wechselrichter (2) ist, und
**daß** die Regelgröße dem Wechselrichter (2) direkt oder über eine Vorrichtung. (5) zum Soll-Ist-Vergleich des Istwertes mit einem Sollwert zuführbar ist.

16. Elektronische Steuerschaltung nach Anspruch 15,
    **dadurch gekennzeichnet,**
    **daß** die Frequenz(f) und/oder das Tastverhälmis (d) des Wechselrichters (2) abhängig von der Regelgröße veränderbar ist.

17. Elektronische Steuerschaltung nach einem der Ansprüche 11 bis 16,
    **dadurch gekennzeichnet,**
    **daß** die Vorrichtung zum Erfassen des Lampensiroms ($i_L$) ein Shunt-Widerstand (R1) ist.

**Claims**

1.  Method for regulating the operating behaviour of least one gas discharge lamp (3), which is operated in particular via an electronic ballast, in dependence upon a regulation parameter ($I_{ist}$),
    **characterised in that**,
    the regulation parameter ($I_{ist}$) is based on the active component of the lamp current ($i_L$), i.e. its real part, or on a parameter corresponding to the active component.

2.  Method for detecting and/or evaluating the operating condition of at least one gas discharge lamp (3), which is operated in particular via an electronic ballast, by means of measuring at least one parameter corresponding to the lamp current ($i_L$),
    **characterised in that**,
    for detecting and/or evaluating the operating condition, there is determined the active component of the lamp current ($i_L$), i.e. its real part, or a parameter corresponding to the active component.

3.  Method according to claim 1 or 2,
    **characterised in that**,
    in dependence upon the active component, the frequency (f) and/or the duty ratio (d) of an a.c. voltage source (2) connected with the gas discharge lamp (3) is varied.

4.  Method according to any of claims 1 to 3,
    **characterised in that**,
    the lamp current ($i_L$) is measured at that point in time at which the lamp voltage ($u_L$) has reached its positive peak value, and
    **in that** the actual value of the lamp current ($I_{ist}$) de-

rived therefrom is employed as regulation parameter.

5.  Method according to any of claims 1 to 3, **characterised in that**, during one half-wave of the lamp voltage ($u_L$) the arithmetical mean of the lamp current ($i_L$) is formed, and **in that** the actual value of the arithmetical mean of the lamp current ($i_L$) is employed as regulation parameter.

6.  Method according to claim 4 or 5, **characterised in that**, the lamp current ($i_L$) is measured via a shunt resistance (R1) connected in series with the gas discharge lamp (3).

7.  Method according to any of claims 4 to 6, **characterised in that**, the brightness of the gas discharge lamp (3) is regulated.

8.  Method according to any preceding claim, **characterised in that**, the parameter corresponding to active component of the lamp current ($i_L$) is derived from the control of at least one controllable switch of an electronic ballast serving for operating the at least one gas discharge lamp (3).

9.  Method according to claim 8, **characterised in that**, after switch-on of the at least one controllable switch of the electronic ballast the current at the time point of the voltage maximum is measured and is employed as the parameter corresponding to the active component of the lamp current ($i_L$).

10. Method according to claim 8, **characterised in that**, between the switching on and switching off of the at least one controllable switch the mean of the current is formed and is employed as the parameter corresponding to the active component of the lamp current ($i_L$).

11. Electronic control circuit for controlling at least one gas discharge lamp (3), in particular for carrying out the method according to any preceding claim, having a voltage source (2) which can be varied in its output frequency (f) and/or in its duty ratio, and having a device for detecting the lamp voltage ($u_L$) and the lamp current ($i_L$), **characterised in that** there is present a device (4) for determining the active component of the lamp current ($i_L$), i.e. its real part.

12. Electronic ballast according to claim 11, **characterised in that**, the device (4) for determining the active component of the lamp current ($i_L$) detects a regulation parameter for the operating behaviour of the gas discharge lamp, in particular the brightness, which parameter is dependent upon the active component.

13. Electronic control circuit according to claim 12, **characterised in that**, the regulation parameter is the actual value ($I_{ist}$) of the measured lamp current ($i_L$) at the point in time when the lamp voltage ($u_L$) has reached its positive peak value.

14. Electronic control circuit according to claim 12, **characterised in that**, the regulation parameter is the actual value of the arithmetical mean of the measured lamp current ($i_L$) during one half-wave of the lamp voltage ($u_L$).

15. Electronic control circuit according to any of claim 12 to 14, **characterised in that**, the variable voltage source is an inverter (2), and **in that** the regulation parameter can delivered to the inverter (2) directly or via a device (5) for desired/actual value comparison of the actual value with a desired value.

16. Electronic control circuit according to claim 15, **characterised in that**, the frequency (f) and/or duty ratio (d) of the inverter (2) is variable in dependence upon the regulation parameter.

17. Electronic control circuit according to any of claim 11 to 16, **characterised in that**, the device for detecting the lamp current ($i_L$) is a shunt resistance (R1) .

**Revendications**

1.  Procédé pour la régulation des caractéristiques de fonctionnement d'au moins une lampe à décharge (3) qui est alimentée, en particulier par l'intermédiaire d'un appareil de ballast électronique, en fonction d'une grandeur de régulation ($I_{ist}$), **caractérisé en ce que** la grandeur de régulation ($I_{ist}$) repose sur la partie active du courant de lampe ($i_L$), c'est-à-dire sur sa partie réelle, ou une grandeur correspondant à la partie active.

2.  Procédé pour la saisie et/ou l'évaluation de l'état de fonctionnement d'au moins une lampe à décharge (3) qui est alimentée, en particulier par un appareil de ballast électronique, par la mesure d'au moins une grandeur correspondant au courant de lampe $(i_L)$,

**caractérisé en ce que**, pour la saisie et/ou l'évaluation de l'état de fonctionnement, on détermine la partie active du courant de lampe $(i_L)$, c'est-à-dire sa partie réelle, ou une grandeur correspondant à la partie active.

3. Procédé selon l'une des revendications 1 ou 2,
**caractérisé en ce que** l'on fait varier, en fonction de la partie active, la fréquence (f) et/ou la durée de cycle (d) d'une source de tension alternative (2) raccordée à la lampe à décharge (3).

4. Procédé selon l'une des revendications 1 à 3,
**caractérisé en ce que** l'on mesure le courant de lampe $(i_L)$ au moment où la tension de lampe $(u_L)$ a dépassé sa valeur de seuil positive, et
**en ce que** l'on utilise la valeur réelle du courant de lampe $(I_{ist})$ obtenue à partir de celle-ci en tant que grandeur de régulation.

5. Procédé selon l'une des revendications 1 à 3,
**caractérisé en ce que**, pendant une demi-onde de la tension de lampe $(u_L)$, la valeur moyenne arithmétique du courant de lampe (iL) est formée, et
en ce l'on utilise la valeur réelle de la valeur moyenne arithmétique du courant de lampe $(i_L)$ en tant que grandeur de régulation.

6. Procédé selon la revendication 4 ou 5,
**caractérisé en ce que** le courant de lampe $(i_L)$ est mesuré par une résistance en shunt (R1) montée en série avec la lampe à décharge (3).

7. Procédé selon l'une des revendications 4 à 6,
**caractérisé en ce que** l'on régule la luminosité ou brillance de la lampe à décharge (3).

8. Procédé selon l'une des revendications précédentes,
**caractérisé en ce que** la grandeur correspondant à la partie active du courant de lampe $(i_L)$ est dérivée à partir de l'excitation d'au moins un commutateur commandable d'un appareil de ballast électronique servant pour l'alimentation d'au moins une lampe à décharge (3).

9. Procédé selon la revendication 8,
**caractérisé en ce qu'**après l'ouverture d'au moins un commutateur commandable de l'appareil de ballast électronique, on mesure le courant au moment du maximum de tension et on l'utilise comme grandeur correspondant à la partie active du courant de lampe $(i_L)$.

10. Procédé selon la revendication 8,

**caractérisé en ce qu'**entre l'ouverture et la fermeture d'au moins un commutateur commandable, la valeur moyenne du courant est formée et elle est utilisée comme grandeur correspondant à la partie active du courant de lampe $(i_L)$.

11. Circuit de commande électronique pour l'excitation d'au moins une lampe à décharge (3), en particulier pour la réalisation du procédé selon l'une des revendications précédentes, avec une source de tension (2) variable dans sa fréquence de sortie (f) et/ou dans sa durée de cycle et avec un dispositif pour la saisie de la tension de lampe $(u_L)$ et du courant de lampe $(i_L)$,
**caractérisé en ce qu'**il est prévu un dispositif (4) pour la détermination de la partie active du courant de lampe $(i_L)$, c'est-à-dire de sa partie réelle.

12. Circuit de commande électronique selon la revendication 11,
**caractérisé en ce que** le dispositif (4) pour la détermination de la partie active du courant de lampe $(i_L)$ détermine une grandeur de régulation en fonction de la partie active pour les caractéristiques de fonctionnement, en particulier pour la luminosité ou brillance, de la lampe à décharge.

13. Circuit de commande électronique selon la revendication 12,
**caractérisé en ce que** la grandeur de régulation est la valeur réelle $(I_{ist})$ du courant de lampe mesuré $(i_L)$ au moment où la tension de lampe $(u_L)$ a atteint sa valeur maximale positive.

14. Circuit de commande électronique selon la revendication 12,
**caractérisé en ce que** la grandeur de régulation est la valeur réelle de la valeur moyenne arithmétique du courant de lampe mesurée $(i_L)$ pendant une demi-onde de la tension de lampe $(u_L)$ .

15. Circuit de commande électronique selon l'une des revendications 12 à 14,
**caractérisé en ce que** la source de tension variable est un onduleur (2) et **en ce que** la grandeur de régulation peut être amenée directement à l'onduleur (2) ou par l'intermédiaire d'un dispositif (5) pour la comparaison valeur nominale-valeur réelle de la valeur réelle avec une valeur nominale.

16. Circuit de commande électronique selon la revendication 15,
**caractérisé en ce que** la fréquence (f) et/ou la durée de cycle (d) de l'onduleur (2) est variable en fonction de la grandeur de régulation.

17. Circuit de commande électronique selon l'une des revendications 11 à 16,

**caractérisé en ce que** le dispositif pour la saisie du courant de lampe ($i_L$) est une résistance en shunt (R1).

FIG. 1

EP 0 876 742 B1

FIG. 2

a

$u_L$

$I_{soll}$

$i_{R1}$

$I_{ist}$

b

$i_{R1}$

$u_L$

$I_{ist}$

c

$i_{R1}$

$u_L$

$I_{ist}$

EP 0 876 742 B1

FIG. 3

EP 0 876 742 B1

## FIG. 4a

Lampenleistung
(W)

b

a

c

Leitungskapazität
(pF)

## FIG. 4b

Arbeitsfrequenz
(kHz)

c

a

b

Leitungskapazität
(pF)

FIG. 5

## FIG. 6

Leitung 1

$R_{Wendel\ 1}$

$R_{Wendel\ 2}$

$R_{Lampe}$

C7

$i_{C7}$

$i_L + i_{C7}$

Leitung 2

## FIG. 7

| Kabelart | Länge l = 2m | | l = 1m | | l = 0,5m | |
|---|---|---|---|---|---|---|
| | f=100kHz | f=10kHz | f=100kHz | f=10kHz | f=100kHz | f=10kHz |
| YMM 4x2,5 Silikon | 190pF | | 94pF | | 42pF | |
| YMM 4x2,5 Standard | 217pF | 244pF | 110pF | 124pF | 52pF | 59pF |
| YMM 4x1,5 Silikon | 190pF | | 164pF | | 77pF | |
| YMM 4x0,75 Standard | 250pF | | 122pF | 140pF | 57pF | 59pF |
| YMM 4x1,5 Standard | 233pF | 250pF | 107pF | 117pF | 50pF | 54pF |
| 4xYe 0,5 in Schlauch 6,4mm | 135pF | 146pF | 60pF | 64pF | 28pF | |

FIG. 8